# EUROPEAN PATENT APPLICATION

(11) **EP 2 116 496 A1**
(43) Date of publication of application: **11.11.2009**
(21) Application number: 07859884.4
(22) Date of filing: 20.12.2007
(51) Int. Cl.: B65H 19/28, B29D 30/00

(54) **TAKE-UP DEVICE FOR LONG MEMBER AND PRODUCTION DEVICE FOR LONG MEMBER**

(30) Priority: 12.01.2007 JP 2007004121
(71) Applicant: Bridgestone Corporation, Tokyo 104-8340 (JP)
(72) Inventor: EMOTO, Michio, Kodaira-shi Tokyo 187-8531 (JP)
(74) Representative: Whalley, Kevin
(86) International application number: PCT/JP2007/074487
(87) International publication number: WO 2008/084640

(57) **Abstract**

Automatic taking-up of a long member is enabled to reduce man-hour etc., needed for take-up operation to improve the productivity in the production of the long member. A take-up device (1) for a long member (50) includes a take-up reel (10), rotation driving means that rotates the take-up reel (10), guide means (20) that guides the long member (50), and a control unit (30) that performs control of the entire device. An insertion portion (13) into which the end portion of the long member (50) can be inserted is formed in the core member (11) of the take-up reel (10). Rotation of the take-up reel (10) is controlled by the control unit (30) to set the opening of the insertion portion (13) at a predetermined position. The end portion of the long member (50) is guided toward that position by the guide means (20), and the end portion is inserted through the insertion portion (13). Then, the take-up reel (10) is rotated to take up the long member (50) on the core member (11).

## Description

### Technical Field

The present invention relates to take-up devices for taking up long members having various sectional shapes, such as ribbon shapes, sheet shapes, and string shapes, onto a take-up reel, and to long-member production devices, and more specifically, it relates to a long-member take-up device capable of automatically taking up a long member being fed, and to a long-member production device having the take-up device.

### Background Art

For example, in production process of pneumatic tires, various long members composed of unvulcanized rubber or the like, such as long feed rubber members to be fed to a molding apparatus such as an extruder, as well as tread rubber, inner liners, sidewall rubber, etc., which are tire components continuously formed to have predetermined sectional shapes by molding apparatuses, are used. In general, after molding (production), these long members are temporarily stored as intermediate products with great lengths having predetermined lengths until they are used by being fed to the extruder or by being formed into green tires.

Conventionally, to store various long members, such as these rubber members, take-up reels having a pair of side plates (flanges) at both ends of a cylindrical core member are widely used. These long members are taken up in layers around the outer circumference of the core member to be stored, and, when used, they are paid out by a predetermined length to be used. Typically, to take up a long member on a take-up reel, first, an operator guides an end of the long member to attach it to the outer circumferential surface of the core member or the like. Then, the take-up reel is rotated in a take-up direction by rotation driving means or the like. Thus, the storage on take-up reels usually requires manual operation at the beginning of taking up, and the operator has to repeat the same operation every time the take-up reels are replaced. This results in a problem in that the productivity decreases for the effort, time, man-hour, etc., needed for that.

To counter this, conventionally, there has been proposed a take-up reel in which a plurality of columnar members are provided between a pair of side plates to form a core member, and an end portion of a long member is fixed by adjoining columnar members to ease attachment of the end portion of the long member to the core member at the beginning of taking up (refer to Patent Document 1).

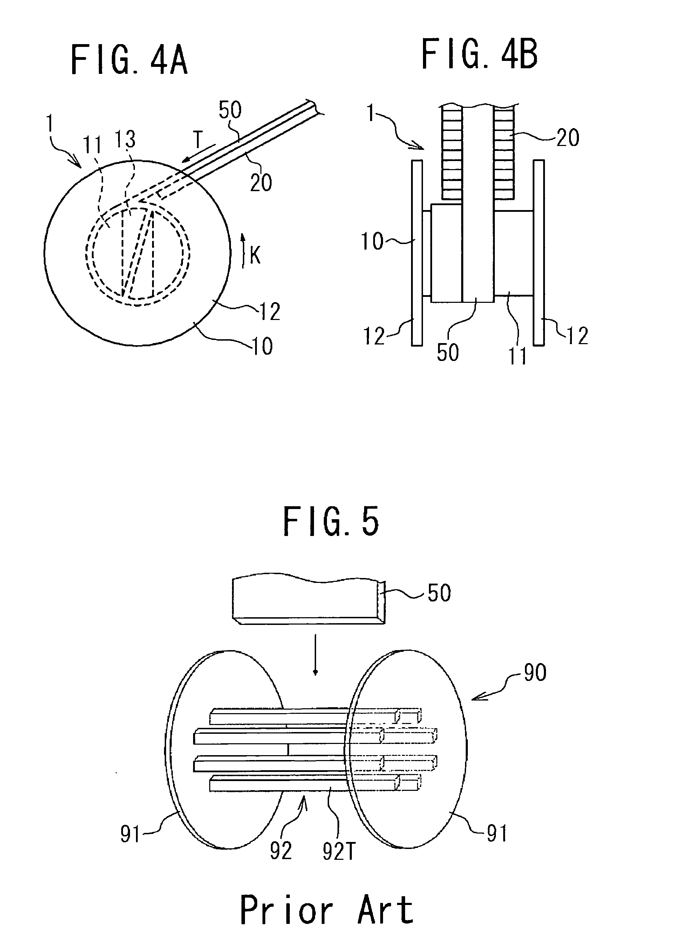

FIG. 5 is a perspective view showing the conventional take-up reel. As shown, a take-up reel 90 includes a pair of substantially disc-shaped side plates 91 disposed so as to face each other at a distance and a core member 92 provided therebetween. The core member 92 includes a plurality of columnar members 92T arranged substantially in a ring shape. In this take-up reel 90, an end portion of a long member 50 is inserted between adjoining columnar members 92T and is allowed to pass between adjoining columnar members 92T on the opposite side across the center of the side plates 91 so as to penetrate through the core member 92, and, in this state, the take-up reel 90 is rotated in the circumferential direction of the side plates 91 to take up the long member 50. At the beginning of taking up, the end portion of the long member 50 is retained by the adjoining columnar members 92T and is prevented from falling off from the core member 92, and is wrapped around the outer circumference of the core member 92 as the take-up reel 90 is rotated.

However, with this conventional take-up reel 90, the end portion of the long member 50 moved toward the core member 92 is not always assuredly inserted between the adjoining columnar members 92T, and, depending on the positions of the columnar members 92T in the circumferential direction (the rotation angle of the take-up reel 90) etc., it may abut against the columnar members 92T and may be prevented from being inserted. Similarly, even when the end portion of the long member 50 can be inserted between the adjoining columnar members 92T, the end portion may not be able to pass between the columnar members 92T on the opposite side across the center of the side plates 91 and may stay inside the plurality of columnar members 92T. In such a case, for example, the force to retain the end portion of the long member 50 is insufficient, allowing the end portion to fall off from between the adjoining columnar members 92T due to the tension applied thereto as the take-up reel 90 is rotated. This may pose a problem for take-up operation of the long member 50. Therefore, because the conventional take-up reel 90 requires manual operation and man-hour at the beginning of taking up, e.g., it requires an operator to guide the end position of the long member 50 and to adjust and insert it between the columnar members 92T, it cannot be said that it has sufficient effect to improve the productivity of taking up of the long member 50.

Patent Document 1: Japanese Unexamined Patent Application, Publication No. 2006-27823

### Disclosure of Invention

### Problems to be Solved by the Invention

The present invention has been made in view of the above-described conventional problems, and an object thereof is to enable automatic taking-up of a long member being fed to reduce man-hour etc., required for the take-up operation, thereby improving the productivity.

### Means for Solving the Problems

According to a first aspect of the present invention, a long-member take-up device that takes up a long member around a core member of a take-up reel from an end portion, the core member of the take-up reel having an insertion portion into which the end portion of the long member can be inserted, the take-up device including: rotation driving means that rotates the take-up reel; guide means that guides the end portion of the long member toward the core member of the take-up reel; and a rotation control unit that controls the rotation of the take-up reel by the rotation driving means and aligns the insertion portion of the take-up reel with a guide position where the guide means guides the end portion of the long member. In a state in which the end portion of the long member is guided and inserted into the insertion portion of the take-up reel aligned therewith, the take-up reel is rotated to take up the long member on the core member. In the long-member take-up device according to the above-described aspect, the insertion portion may be formed so as to penetrate through the core member, and, the long member may be taken up with the end portion thereof being inserted through the insertion portion. The long-member take-up device according to the above-described aspect may further include measuring means that measures the length of the end portion of the long member inserted into the insertion portion or detection means that detects the end position of the long member. In the long-member take-up device according to the above-described aspect, the take-up reel may include the core member having a columnar shape and a pair of side plates disposed at both ends of the core member in an axial direction, and the insertion portion may be a through-hole that opens at both ends in an outer surface of the core member on both sides across the axis and penetrates through the core member. In the long-member take-up device according to the above-described aspect, the long member may be a rubber member. According to a second aspect of the present invention, a long-member production device includes a molding apparatus for molding a long member and the long-member take-up device for taking up the long member molded by the molding apparatus, according to any one of the above-described configurations.

### Advantages

The present invention enables automatic taking-up of a long member being fed, thereby reducing man-hour etc., required for the take-up operation and improving the productivity.

### Brief Description of Drawings

[FIG. 1] FIG. 1 is a schematic view showing a relevant part of a long-member take-up device according to this embodiment.
[FIG. 2] FIG. 2 is a schematic view of a relevant part showing a long-member take-up operation by the long-member take-up device according to this embodiment.
[FIG. 3] FIG. 3 is a schematic view of the relevant part showing the long-member take-up operation by the long-member take-up device according to this embodiment.
[FIG. 4] FIG. 4 is a schematic view of the relevant part showing the long-member take-up operation by the long-member take-up device according to this embodiment.
[FIG. 5] FIG. 5 is a perspective view showing a conventional take-up reel.

### Explanation of Reference Numerals

1: long-member take-up device, 10: take-up reel, 11: core member, 12: side plate, 13: insertion portion, 20: guide means, 30: control unit, 31: microcomputer, 32: arithmetic processing means, 33: storage means, 34: interface, and 50: long member.

### Best Modes for Carrying Out the Invention

An embodiment of the present invention will be described below with reference to the drawings. A long-member take-up device according to this embodiment is a device for taking up long members that can be taken up, have various sectional shapes, such as ribbon shapes, sheet shapes, string shapes, and rod shapes, and are formed of various materials, for example, rubber members, such as the above-described feed rubber members and tire components, and long synthetic resin sheets, on a core member of a take-up reel from an end portion. An explanation will be given taking the case where a ribbon-shaped long member (rubber member) having a substantially rectangular cross-section is taken up as an example.

This take-up device is used not only when a long member being fed is continuously taken up on the take-up reel and each take-up reel is temporarily stored, but also when, for example, a long-member production device and a molding apparatus etc., such as an extruder for continuously molding long members having predetermined sectional shapes or molding rolls consisting of a pair of reduction rolls, are configured together and the long member to be molded is taken up.

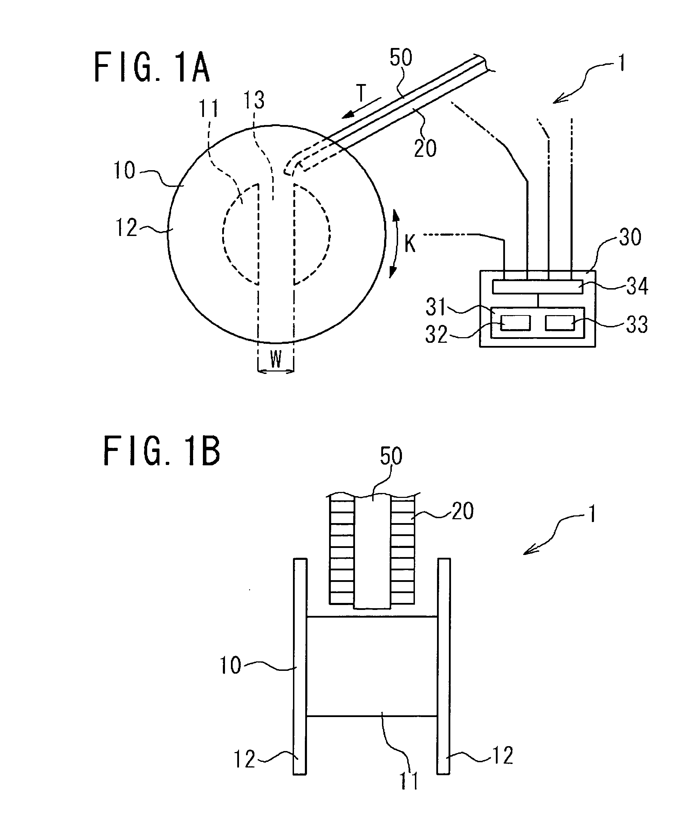

FIG. 1 is a schematic view showing a relevant part of a long-member take-up device according to this embodiment, in which FIG. 1A is a side view of a take-up reel 10 provided in the take-up device 1, as viewed from an axial direction, and FIG. 1B is a front view of the take-up reel 10, as viewed from a radial direction. As shown, the take-up device 1 includes the take-up reel 10 that takes up a long member 50 and is rotatable about the axis, guide means 20 that leads and guides the long member 50 (end portion) to a predetermined position of the take-up reel 10, rotation driving means (not shown) that rotates the take-up reel 10 about the axis, and a control unit 30 (shown only in FIG. 1A) that is connected to the aforementioned parts to control the entire take-up device 1.

The take-up reel 10 includes a columnar core member 11 formed in a substantially cylindrical shape, square-column shape, or the like having a predetermined length in the axial direction (left-right direction in FIG. 1B), and a pair of side plates 12 disposed at both ends of the core member 11 in the axial direction. The core member 11 has an insertion portion 13 into which an end portion of the long member 50 can be inserted. Herein, the core member 11 has a substantially cylindrical shape as a whole and is formed to have a length, in the axial direction, that allows the long member 50 to be smoothly wrapped and taken up, according to the width of the long member 50 to be wrapped, the width of the guide means 20 (see FIG. 1B), and the like (herein, longer than them). The pair of side plates 12 having a substantially disc shape with a diameter larger than the outer diameter of the core member 11 are attached substantially concentrically at both ends of the core member 11 so as to face each other substantially in parallel at one surface, and rotate with the core member 11.

The insertion portion 13 is formed so as to penetrate through a take-up surface, on which the long member 50 is taken up, in a direction substantially perpendicular to the axial direction of the core member 11. That is, in the take-up reel 10, a through-hole having a predetermined shape and extending in a straight line in the core member 11 is formed such that both ends thereof open in the outer surface (the outer circumferential surface) of the core member 11 on both sides across the axis, which is used as the insertion portion 13. The insertion portion 13 is formed as a substantially rectangular-parallelepiped cavity, in which the opening in the outer circumferential surface of the core member 11 having a substantially rectangular shape elongated in the axial direction extends therefrom in a straight line in the radial direction of the core member 11 through the axis position and opens in the outer circumferential surface on the other side.

Herein, the insertion portion 13 is formed, according to the sectional shape, size, etc., of the long member 50 to be inserted, to have a size into which the end portion thereof can be inserted and fixed, and the width W of the opening (refer to FIG. 1A) is formed to be equal to the maximum thickness of the long member 50 or larger than that by a predetermined dimension. On the other hand, the length of the opening of the insertion portion 13 (the length in the axial direction of the core member 11) may be a length into which the end portion of the long member 50 can be inserted, and may be a length equal to or larger than the width of the long member 50. Accordingly, for example, the insertion portion 13 may be formed to have a predetermined opening length and disposed at a predetermined position in the core member 11, or may be formed to have a length larger than the width of the guide means 20 and disposed so as to include the entire area to which the guide means 20 can guide the long member 50. Furthermore, the insertion portion 13 may be formed between the pair of side plates 12 so as to transverse the core member 11 in the axial direction. In such a case, the core member 11 includes, for example, a pair of substantially semi-cylindrical members etc., provided between the side plates 12 so as to face each other with a predetermined distance therebetween, and a gap between the pair of members serves as the insertion portion 13.

The rotation driving means (not shown) for rotating and driving the take-up reel 10 includes, for example, a driving source, such as a stepping motor, and a transmission mechanism that transmits the motive power therefrom to one of the side plates 12 of the take-up reel 10 to rotate it in the circumferential direction, and rotates the take-up reel 10 about the axis (arrow K in FIG. 1A), causing it to take up the long member 50. Furthermore, the rotation driving means controlled by the control unit 30 operates according to the control signal to rotate the take-up reel 10 at a predetermined speed and set the position of the insertion portion 13 of the take-up reel 10 in the rotation direction (the position of the opening of the insertion portion 13 in the outer circumferential surface of the core member 11 in the circumferential direction) at a predetermined position.

The guide means 20 continuously moves (arrow T in FIG. 1A) and guides the long member 50 being fed to the take-up reel 10, and leads the end portion thereof toward a predetermined position in the core member 11 of the take-up reel 10. The guide means 20 includes, for example, transportation (moving) means, such as a circulating endless-belt conveyor or a plurality of rotating transportation rollers, and driving means for driving the transportation means, such as a pulse motor. An end portion of the guide means 20 at the take-up reel 10, from which the long member 50 is paid out toward the core member 11, is disposed between the pair of side plates 12 of the take-up reel 10 (refer to FIG. 1B) and a predetermined distance above the core member 11 (refer to FIG. 1A). The guide means 20, while the longitudinal direction of the long member 50 is substantially perpendicular to the axial direction of the core member 11, pays out an end portion thereof substantially vertically downward and guides it toward substantially the center of the core member 11. Furthermore, the guide means 20 is controlled by the control unit 30 and pays out the long member 50 at a predetermined speed or stops it, according to the control signal or the like.

The control unit 30 (refer to FIG. 1A) includes, for example, a microcomputer 31 having arithmetic processing means 32, such as a microprocessor (MPU), for performing various data processing, analysis, and calculation, and storage means 33, such as a ROM storing various programs and a RAM for temporarily storing data for processing; and an interface 34 for providing connection to an external device. The control unit 30 is connected via the interface 34 to the respective parts of the take-up device 1, such as the guide means 20 and the rotation driving means of the take-up reel 10, and various sensors (not shown), and transmits control signals, such as drive commands and stop commands, as well as various data necessary for the take-up operation of the long member 50 between itself and them.

Thus, the control unit 30 controls the rotation of the take-up reel 10 by the above-described rotation driving means and rotates and moves the position of the insertion portion 13 of the take-up reel 10 in the rotation direction (the opening position) to the position where the guide means 20 guides the end portion of the long member 50 to substantially align these positions. Furthermore, the control unit 30 controls the guide means 20 to cause it to pay out and guide the end portion of the long member 50 toward the insertion portion 13 of the take-up reel 10 aligned therewith. The end position of the long member 50 is inserted into the insertion portion 13 by a predetermined length and located at a predetermined position.

The alignment of the insertion portion 13 is performed, for example, by controlling the rotational position of the rotation driving means by a stepping motor, or by providing a mark, such as a hole or a projection, corresponding to the position of the opening of the insertion portion 13 on the side plates 12 of the take-up reel 10 or the like and stopping the rotation driving means when a detection sensor detects it. In addition, the take-up device 1 has measuring means for measuring the length of the end portion of the long member 50 inserted into the insertion portion 13 (hereinafter, insertion-length measuring means) or detection means for detecting the end position of the long member 50 (hereinafter, end-position detection means). By connecting them to the control unit 30, a measurement result or a detection result is used in the above-described control of the guide means 20. The insertion-length measuring means is known means that directly or indirectly measures the insertion length, for example, means for measuring the displacement (length) of the long member 50 being paid out in a contacting or non-contacting manner or means for calculating and measuring the insertion length of the end portion by measuring the time required for paying out the long member 50 at a constant speed. Furthermore, the end-position detection means is known means, such as a detection sensor, using, for example, light-emitting and light-receiving elements to detect whether or not the end of the long member 50 reaches a predetermined position.

In this embodiment, the control unit 30 is connected also to the other units and sensors, for example, a feeding unit and molding apparatus for the long member 50, to control the entire device, i.e., the production device for the long member 50 including the take-up device 1. In addition, the control unit 30 operates the respective parts connected thereto according to a predetermined program and a predetermined process, i.e., operates the respective parts of the device simultaneously, causing them to perform operations such as taking up and producing of the long member 50. The take-up operation will be described below.

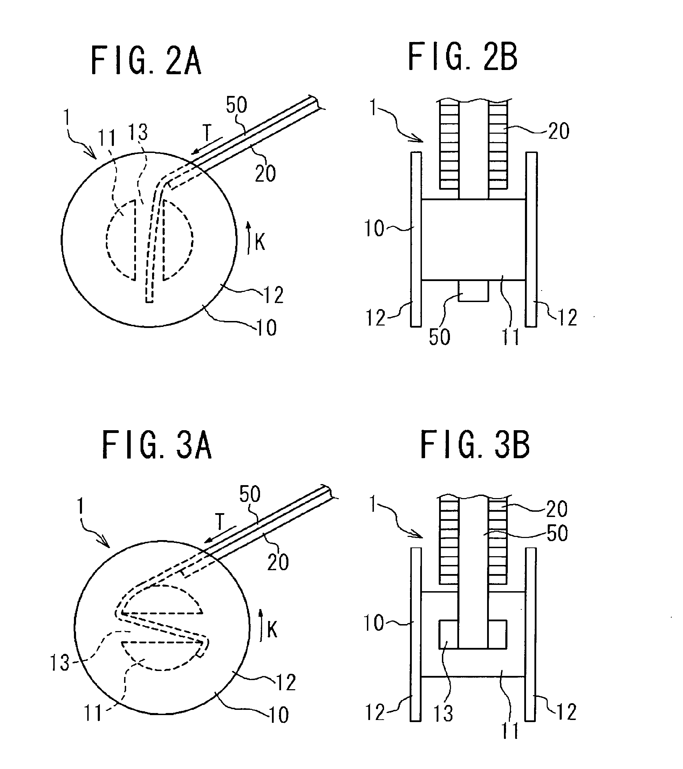

FIGS. 2, 3, and 4 are schematic views of a relevant part showing take-up operation of the long member 50 by the take-up device 1, and show operations subsequent to the above-described FIG. 1. FIGS. 2A, 3A, and 4A are side views of the take-up reel 10, as viewed from the axial direction, and FIGS. 2B, 3B, and 4B are front views of the take-up reel 10, as viewed in the radial direction.

To take up the long member 50 with the take-up device 1, first, in a state in which the paying out of the long member 50 by the guide means 20 is stopped (refer to FIG. 1), the take-up reel 10 is rotated and stopped after the position (direction) of the insertion portion 13 is set at a predetermined insertion position (direction) of the long member 50. The position of the insertion portion 13 in the rotation direction (the position of the opening thereof in the circumferential direction) is thus substantially aligned with the guide position of the end portion of the long member 50. Herein, the insertion portion 13 is disposed substantially vertically with the openings thereof being located on the upper and lower sides of the core member 11.

Next, the guide means 20 is driven to pay out the long member 50 toward the take-up reel 10 (arrow T in FIG. 1A). The end portion of the long member 50 is moved toward the core member 11 (herein, moved downward) and is guided and inserted into the insertion portion 13 (opening) aligned therewith. The long member 50 continues to be inserted for a predetermined length. When the end position of the long member 50 arrives at a predetermined position, in that state, the take-up reel 10 is rotated in the take-up direction to wrap the end portion of the long member 50 around the outer surface of the core member 11 and start taking up.

More specifically, in the take-up device 1, the end of the long member 50 (refer to FIG. 2) is inserted until it passes through the opening of the insertion portion 13 on the opposite side (lower side in FIG. 2) and is away from the outer surface of the core member 11 by a predetermined length, allowing the end portion of the long member 50 to pass from one side of the insertion portion 13 (core member 11) to the other side thereof (from the upper side to the lower side in FIG. 2). Then, in this state, while the long member 50 is paid out from the guide means 20 at a predetermined speed (arrow T in FIG. 2), the take-up reel 10 is simultaneously rotated at a predetermined speed (arrow K in FIG. 2). Thus, the long member 50 is wrapped around the outer surface of the core member 11 while the end portion thereof is retained by the insertion portion 13 (refer to FIG. 3). By continuing this simultaneously (refer to FIG. 4), the long member 50 is wrapped around the core member 11 in layers.

In this manner, the long member 50 is wrapped around the core member 11 by a predetermined length (time) to complete taking up on the take-up reel 10. During that time, the control unit 30 synchronizes the speed at which the long member 50 is paid out with the rotation speed of the take-up reel 10 and controls such that the take-up reel 10 takes up the long member 50 while applying an appropriate tension thereto. At the same time, the take-up reel 10 or the guide means 20 of the take-up device 1 is reciprocated in the axial direction such that the long member 50 is substantially uniformly wrapped around the core member 11 of the take-up reel 10 in the axial direction and radial direction thereof. When taking up for a predetermined length is completed, paying out of the long member 50 and rotation of the take-up reel 10 are stopped and the terminal end of the long member 50 is cut by cutting means (not shown). Then, the take-up reel 10 is removed from the take-up device 1 by a transportation device (not shown) and is transported to a predetermined storage place to be stored.

In the take-up device 1 according to this embodiment, at the beginning of the above-described taking up, the guide position of the end portion of the long member 50 is aligned with the insertion portion 13 and, in that state (refer to FIG. 2), the end portion of the long member 50 is paid out and guided to be assuredly and smoothly inserted into the insertion portion 13. Furthermore, the end portion of the long member 50 inserted into the insertion portion 13 is bent by the rotation of the take-up reel 10 along a corner of the insertion portion 13 (opening) with which it comes into contact (refer to FIG. 3) in accordance with the rotation, and the bent portion is retained so as to be hung on the corner or is retained by friction by being brought into contact with the surfaces in the insertion portion 13 facing each other or by being sandwiched. Thus, the end portion of the long member 50 is retained so as not to fall off from the insertion portion 13 and is wrapped around the outer circumference of the core member 11 in accordance with the rotation of the take-up reel 10 to wind the long member 50.

Accordingly, with the take-up device 1, at the beginning of taking up of the long member 50, attachment of the end portion thereof to the core member 11 can be assuredly performed without needing manual operation and subsequent wrapping of the end portion can be automated, i.e., automatic taking-up of the long member 50 being fed becomes possible. This can reduce the effort, time, man-hour, etc., required for the take-up operation. As a result, the production, storing operation, etc., of the long member 50 can be simplified, improving the productivity and reducing the production costs. Furthermore, in the take-up device 1, the insertion of the end portion of the long member 50 into the insertion portion 13 is performed while the above-described insertion-length measuring means performs measurement or the end-position detection means performs detection. Thus, the insertion state, such as insertion length and position, can be stably and repeatedly maintained in a predetermined state. At the same time, because the end portion of the long member 50 is assuredly inserted into the insertion portion 13, take-up errors are reduced. Thus, taking up can be performed more assuredly.

Even if the end portion of the long member 50 is inserted in such a manner that the end position thereof is positioned in the insertion portion 13 of the take-up reel 10 without passing therethrough, the end portion of the long member 50 can be retained with sufficient force at the insertion portion 13, depending on the difference between the thickness of the long member 50 and the opening width of the insertion portion 13, the contact areas therebetween, the surface property, such as adhesiveness, of the long member 50, or the like. Thus, the long member 50 may be inserted into the insertion portion 13 without passing therethrough. However, if the end portion of the long member 50 passing through the insertion portion 13 is taken up, the insertion portion 13 more strongly retains the end portion of the long member 50, enabling wrapping of the end portion around the core member 11 to be more assuredly performed at the beginning of taking up. Thus, it is more desirable that the insertion of the long member 50 be performed in that way.

Furthermore, the take-up reel 10 may be formed in a shape different from that according to this embodiment, for example, may consist only of the core member 11 with no side plates 12. However, if the take-up reel 10 is formed such that the pair of side plates 12 are disposed at both ends of the core member 11, the side plates 12 can prevent the long member 50 from protruding in the axial direction during taking up, making it possible to prevent the long member 50 having been taken up from touching the floor or the like during storage after taking up. Accordingly, it is more desirable that the take-up reel 10 include the core member 11 and the pair of side plates 12.

Although, in this embodiment, the insertion portion 13 is formed so as to penetrate through the axis position of the core member 11, it may be formed so as to pass through a position other than the axis position of the core member 11, i.e., so as to extend in another direction. Moreover, for example, a plurality of the insertion portion 13 may be formed in the axial direction, circumferential direction, etc., of the core member 11 at a plurality of locations in the core member 11, and may have a shape other than the shape extending in a straight line between both openings, for example, a shape extending in a curved line or in a bent line and into which the long member 50 can be inserted. Furthermore, the sectional shape (opening shape) of the insertion portion 13 may be formed in a shape other than the rectangular shape, for example, a circular shape, a crescent shape, or a polygonal shape such as a triangular or trapezoidal shape, according to the sectional shape of the long member 50 to be inserted. Depending on the insertion conditions and the like of the long member 50, it may be formed in a blind-hole shape without penetration.

## Claims

1. A long-member take-up device that takes up a long member around a core member of a take-up reel from an end portion, the core member of the take-up reel having an insertion portion into which the end portion of the long member can be inserted, the long-member take-up device comprising:
rotation driving means that rotates the take-up reel;
guide means that guides the end portion of the long member toward the core member of the take-up reel; and
a rotation control unit that controls the rotation of the take-up reel by the rotation driving means and aligns the insertion portion of the take-up reel with a guide position where the guide means guides the end portion of the long member,
wherein, in a state in which the end portion of the long member is guided and inserted into the insertion portion of the take-up reel aligned therewith, the take-up reel is rotated to take up the long member on the core member.

2. The long-member take-up device according to claim 1,
wherein the insertion portion is formed so as to penetrate through the core member, and
wherein the long member is taken up with the end portion thereof being inserted through the insertion portion.

3. The long-member take-up device according to claim 1 or 2, further comprising measuring means that measures the length of the end portion of the long member inserted into the insertion portion or detection means that detects the end position of the long member.

4. The long-member take-up device according to any one of claims 1 to 3,
wherein the take-up reel includes the core member having a columnar shape and a pair of side plates disposed at both ends of the core member in an axial direction, and
wherein the insertion portion is a through-hole that opens at both ends in an outer surface of the core member on both sides across the axis and penetrates through the core member.

5. The long-member take-up device according to any one of claims 1 to 4,
wherein the long member is a rubber member.

6. A long-member production device comprising:
a molding apparatus for molding a long member; and
the long-member take-up device for taking up the long member molded by the molding apparatus, according to any one of claims 1 to 5.
